# FASCICULE DE BREVET EUROPEEN

(11) **EP 4 153 867 B1**
(45) Date de publication et mention de la délivrance du brevet: **22.10.2025**
(21) Numéro de dépôt: 21725160.2
(22) Date de dépôt: 11.05.2021
(51) Int. Cl.: F04D 29/32, F04D 29/68

(54) **SOUS-ENSEMBLE DE COMPRESSEUR BASSE PRESSION D'UNE TURBOMACHINE D'AÉRONEF**
TEIL EINES NIEDERDRUCKVERDICHTERS EINES FLUGZEUG-TRIEBWERKS
PART OF A LOW PRESSURE COMPRESSOR OF AN AIRCRAFT ENGINE

(30) Priorité: 20.05.2020 BE 202005357
(43) Date de publication de la demande: 29.03.2023
(73) Titulaire: Safran Aero Boosters, 4041 Herstal (BE)
(72) Inventeur: HIERNAUX, Stéphane, 4041 Herstal (BE)
(74) Mandataire: Gevers Patents
(86) Numéro de dépôt international: PCT/EP2021/062437
(87) Numéro de publication internationale: WO 2021/233730

(56) Documents cités:
- EP-A1- 2 434 163
- JP-A- H0 712 098
- US-A1- 2005 058 541
- US-A1- 2009 246 007
- US-B1- 6 514 039

## Description

### Domaine technique

L'invention présentement exposée concerne un sous-ensemble de compresseur basse pression d'une turbomachine d'aéronef et un tel compresseur basse pression comprenant ce sous-ensemble.

### Art antérieur

Généralement, une turbomachine d'aéronef est munie de deux compresseurs, un compresseur basse pression et un compresseur haute pression, pour aspirer et comprimer de l'air pour l'amener à des vitesse, pression et température adaptées, et ce préalablement à son acheminement dans une chambre de combustion.

Chaque tel compresseur comprend typiquement une pluralité d'étages de compresseur alignés le long d'un axe moteur, dirigé d'amont vers aval. Chaque étage est constitué d'un organe mobile (partie de rotor) s'étendant le long de l'axe moteur et d'un organe fixe (partie de stator) appelé « redresseur ». Les organes mobiles et fixes des étages sont ainsi alternés le long de l'axe moteur. Chaque organe est constitué d'un aubage, c'est-à-dire un anneau d'aubes agencées de façon circonférentielle autour de l'axe moteur. Des paramètres techniques tels que les dimensions et la géométrie des aubes sont déterminés pour que les conditions de fonctionnement de chaque étage soient adaptées à celles des étages en amont et/ou en aval le long de l'axe moteur.

Il est connu d'utiliser des redresseurs de compresseur basse pression munis d'aubes en porte-à-faux, chacune fixée par un pied à un carter extérieur et s'étendant essentiellement radialement intérieurement vers l'axe moteur à partir de son pied. De cette façon, la tête de l'aube en porte-à-faux, opposée radialement à son pied, est libre et en vis-à-vis d'un moyeu du rotor auquel sont couplés les organes mobiles des étages. Cette architecture du redresseur nécessite évidemment d'aménager un jeu entre chaque tête d'aubes du redresseur (qui est donc fixe) et le moyeu du rotor (qui est donc apte à tourner sur lui-même). Lorsque la turbomachine est en fonctionnement, ce jeu induit généralement une génération et une circulation d'un tourbillon d'air dit « de fuite » d'aval vers amont, soit dans un sens contraire au flux d'air principal circulant dans le compresseur basse pression. Ces tourbillons sont dus au fait qu'il existe une différence de pression entre l'intrados et l'extrados du redresseur, et entre les bords de fuite et d'attaque des aubes, vu que la pression du flux d'air principal au sein du compresseur croit d'amont en aval.

Ces tourbillons engendrent des pertes dans le compresseur qui impactent son rendement. Il est donc préférable de les limiter.

Une solution connue pour résoudre ce problème est exposée dans le document EP 3 095 963 A1 et consiste essentiellement à adjoindre au redresseur une virole intérieure entre le moyeu du rotor et chaque tête d'aube du redresseur, et ce de façon à reconstituer la veine aérodynamique intérieure du compresseur au niveau du redresseur. Dans ce cas, les têtes d'aubes ne sont donc plus libres. Elles sont fixées à cette virole intérieure dans une interface d'étanchéité pour éviter la formation des tourbillons de fuite. Toutefois, comme la virole elle-même doit être agencée entre la partie rotor et la partie stator, il reste nécessaire de conserver un jeu entre ces parties, ce jeu pouvant lui-même être source de fuites d'air sous la virole intérieure, et donc de pertes dans le compresseur. Pour limiter ces fuites, comme divulgué également dans EP 3 095 963 A1, la virole intérieure est munie d'une piste d'un revêtement abradable et le moyeu de rotor est muni de léchettes, en vis-à-vis de cette piste. L'intégration ces éléments additionnels implique néanmoins une masse accrue non souhaitée et par conséquent une diminution de rendement du compresseur basse pression. Cette augmentation de masse est par ailleurs accentuée dans le cas d'un redresseur à calage variable car chaque aube du redresseur doit alors également être munie d'un pivot s'insérant dans la virole intérieure, celle-ci étant, dans ce cas, généralement constituée de deux parties à assembler. Les documents US 2009/246007 A1 et EP 2 434 163 A1 illustrent également le contexte technique de l'invention.

### Résumé de l'invention

Un objet de l'invention est de fournir un sous-ensemble de compresseur basse pression d'une turbomachine d'aéronef comprenant un redresseur muni d'aubes en porte-à-faux, de sorte que le compresseur basse pression soit de meilleur rendement.

À cet effet, la présente invention propose un sous-ensemble de compresseur basse pression d'une turbomachine d'aéronef selon la revendication 1.

Le sous-ensemble de compresseur basse pression selon la présente invention permet de réduire l'impact négatif des tourbillons de fuite qui peuvent survenir entre les têtes d'aubes et le rotor, sans impacter de façon négative la masse du compresseur basse pression. En particulier, il permet d'obtenir un meilleur rendement du compresseur basse pression sans les inconvénients des solutions connues de l'état de la technique.

En effet, plutôt que d'adjoindre des éléments supplémentaires au stator pour limiter les tourbillons de fuite susmentionnés, le sous-ensemble de compresseur basse pression selon la présente invention propose de traiter le moyeu de rotor, de préférence de façon non axisymétrique, en vis-à-vis (direct) des aubes du redresseur, en y créant des renfoncements intérieurs bordés par une virole intérieure additionnelle percées d'orifices, et ce sans modifier aucunement la partie de stator. En particulier, chaque aube conserve une tête libre (et reste donc en porte-à-faux), contrairement à la solution exposée dans le document EP 3 095 963 A1. Seule la partie de rotor est modifiée. La cavité et les orifices permettent passivement une circulation d'un flux d'air au niveau du redresseur indépendamment du flux d'air principal dans le compresseur basse pression. De cette façon, les tourbillons de fuite éventuels qui pourraient se former peuvent circuler d'aval vers amont par la cavité via les orifices car cette cavité offre plus d'espace que le jeu minimal généralement laissé entre les têtes d'aubes et le moyeu. De façon avantageuse, la position des orifices peut être choisie pour amener le flux d'air de ces tourbillons de fuite d'aval vers amont à une position souhaitée au niveau du redresseur, et même en amont de celui-ci. De cette façon, il est possible d'influencer l'écoulement du flux d'air pour limiter les tourbillons de fuite au niveau du jeu entre le stator et le rotor et, par la même occasion, limiter l'impact négatif de ces tourbillons de fuite pour le rendement du compresseur basse pression. Cet avantage est en outre obtenu sans modifier l'architecture des aubes ce qui est intéressant car cette architecture présente des avantages en terme de masse, d'efficacité aérodynamique et de simplicité conceptuelle. Enfin, il faut souligner que l'invention ne pénalise pas le rendement du compresseur basse pression par une augmentation de sa masse. Le sous-ensemble de compresseur basse pression (appelé dans la suite plus simplement « sous-ensemble ») selon l'invention permet donc avantageusement un meilleur rendement du compresseur basse pression sans impacter négativement sa masse.

Comme l'invention repose sur le fait que la cavité permet une circulation de flux d'air qui se situait initialement entre le rotor et le stator, il est très préféré que le jeu entre la virole intérieure et les têtes d'aubes soit minimal, pour éviter qu'il subsiste une trop grande circulation parallèle de ces tourbillons de fuite entre les têtes d'aubes et la virole intérieure. En outre, la présence de la cavité rend préférable de reconstituer le plus proprement et régulièrement possible la veine aérodynamique intérieure du rotor pour ne pas impacter le compresseur d'un point de vue aérodynamique. Dès lors, pour ces deux raisons, la virole intérieure prolonge très préférentiellement une surface extérieure du moyeu de sorte qu'une veine aérodynamique intérieure du rotor soit (re)constituée de façon régulière. Le jeu initial entre le moyeu et les têtes d'aubes correspond de préférence au jeu entre la virole intérieure (et/ou le moyeu) et les têtes d'aubes. Cette réalisation préférée répond à des exigences aérodynamiques au sein du compresseur basse pression.

Pour des raisons d'exhaustivité, il est rappelé, dans le cadre de ce document, certaines des notions susmentionnées et bien connues d'un homme du métier. Un « moyeu » correspond à une partie centrale d'une pièce mécanique tournante conique et/ou annulaire et/ou discoïdale. Dans le cas d'un compresseur basse pression, le moyeu du rotor est une pièce conique centrale en ce qu'elle s'étend le long de l'axe moteur et autour de celui-ci. L'usage d'un moyeu couplé aux aubages mobiles du compresseur est typique du compresseur basse pression, des « disques » substituant généralement le moyeu dans le cadre du compresseur haute pression. De préférence, un aubage mobile du rotor appartenant au même étage de compresseur basse pression que le redresseur considéré comprend des aubes mobiles dont un pied est fixé au moyeu. Le terme d'« aube en porte-à-faux » est aussi bien connu d'un homme du métier. Le terme « en porte-à-faux » fait, par sa définition, référence à un maintien au-dessus du vide, sans support immédiat par le dessous. Dans le cas des aubes d'un redresseur, il s'agit d'une extension radiale de l'extérieur vers l'intérieur des aubes, la tête de chaque aube étant maintenue (« dans le vide ») en vis-à-vis (direct) du moyeu du rotor (et/ou de la virole intérieure et/ou de la cavité, dans le cas de cette invention), au niveau intérieur du compresseur basse pression. Dans ce cas, les pieds des aubes sont de préférence fixés à un carter extérieur du compresseur basse pression. Ainsi, chaque aube comprend un « pied » fixé extérieurement, une « tête libre » (c'est-à-dire, non fixée) intérieurement, un « bord d'attaque » orienté vers l'amont pour attaquer le flux d'air principal circulant dans le compresseur basse pression, et un « bord de fuite » orienté vers l'aval. De préférence, les aubes considérées sont alignées de façon circonférentielle, et présentent un profil semblable. Enfin, il est à noter que la mention de « redresseur muni d'aubes » ne limite pas nécessairement les aubes considérées dans cet énoncé (et dans la suite par les mentions « chacune des aubes » ou « les aubes ») à toutes les aubes du redresseur. Une sélection d'aubes du redresseur est donc dans la portée de ces mentions. Néanmoins, ce sont préférentiellement, toutes les aubes du redresseur qui sont considérées par ces dernières.

Dans le cadre du présent document, il est également rappelé qu'un « renfoncement » est une forme de creux et/ou de retrait de matière, en l'occurrence, dans le moyeu. Il est de préférence créé par un traitement du moyeu et s'étend préférentiellement axialement et circonférentiellement. Il n'est de préférence pas axisymétrique par rapport à l'axe moteur. Une « cavité » correspond à un espace vide au sein d'un corps solide, en l'occurrence dans la partie de rotor considérée. Cette cavité est de préférence bordée par la virole intérieure et le moyeu, ou de façon plus précise, par la virole intérieure et une surface extérieure du moyeu bordant le renfoncement. Enfin, il est rappelé que le terme « orifice » désigne une ouverture qui fait communiquer de façon fluidique une cavité avec l'extérieur, en l'occurrence préférentiellement avec un espace extérieur séparant les têtes d'aubes et la virole intérieure. En particulier, un orifice est un trou débouchant de part et d'autre de la virole intérieure. Ces définitions sont largement connues d'un homme du métier et ne sont précisées que pour être exhaustif. Dans le cas de l'invention, chacun des orifices traverse la virole intérieure. Le fait que les orifices soient précisément en communication fluidique avec la cavité créée par le renfoncement et bordée par la virole intérieure permet à un flux d'air (notamment, des tourbillons de fuite) de traverser les orifices pour circuler dans la cavité, délivrant ledit espace extérieur (qui correspond à un jeu entre le stator et le rotor) d'une partie significative de ce flux d'air. La mention « comprenant des orifices » dans ce texte se comprend comme étant « comprenant au moins deux orifices », de façon à permettre d'une part une captation et d'autre part une injection de ce flux d'air. L'invention n'est aucunement limitée à la présence d'une seule cavité et/ou d'un seul renfoncement. En particulier, le rotor est susceptible de comprendre une pluralité de tels renfoncements, cavités et orifices, et ce indépendamment ou non les uns des autres.

Selon un mode de réalisation de l'invention, le renfoncement intérieur est formé d'au moins une déformation d'une paroi du moyeu. Ladite paroi est préférentiellement formée d'une partie de plaque ou de tôle. L'épaisseur de ladite paroi est préférentiellement sensiblement constante depuis l'amont du renfoncement intérieur jusqu'à l'aval du renfoncement intérieur.

Selon un mode de réalisation de l'invention, la virole intérieure est formée d'une partie de plaque (ou de tôle) annulaire, et ayant, préférentiellement, une épaisseur constante.

Selon un mode de réalisation préféré de l'invention, un premier des orifices s'étend (au moins) en aval d'un bord d'attaque d'une des aubes (du redresseur, en vis-à-vis), et un deuxième des orifices s'étend (au moins) en amont de ce même bord d'attaque.

Dès lors, le premier orifice est apte à se situer de préférence entre la cavité et la tête de cette aube (et ce à certains instants lors de la rotation du moyeu autour de l'axe moteur, amenant le premier orifice face à cette tête d'aube). De façon avantageuse, cet agencement d'au moins deux des orifices permet un contrôle passif d'au moins une partie du flux d'air qui constitue les éventuels tourbillons de fuite par sa captation en aval au niveau du premier orifice et sa réinjection en amont par le deuxième orifice, étant donné que ces deux orifices sont tous les deux en communication fluidique avec la cavité, cette partie du flux d'air circulant dans la cavité, entre les deux orifices.

Il est à noter que la terminologie « en aval », « en amont » fait référence à une position le long de l'axe moteur considéré comme seul repère. En particulier, mathématiquement, un premier point de l'espace est en amont (respectivement, en aval) d'un deuxième point de l'espace si sa composante le long de l'axe moteur est plus petite (respectivement, plus grande) que celle du deuxième point. En appliquant cette même définition, un premier ensemble de points (correspondant abstraitement, à un orifice ou à un bord d'aube, dans le cas présent) « s'étend (au moins) en amont » (respectivement, « au moins en aval ») d'un deuxième ensemble de points s'il comprend au moins un point qui est en amont (respectivement, en aval) de tous les points du deuxième ensemble de points. Cette définition est à distinguer du cas où le premier ensemble de points s'étend « uniquement (ou totalement, complètement) en amont » (respectivement, « uniquement en aval ») du deuxième ensemble de points, correspondant au fait que chacun de ses points est en amont (respectivement, en aval) de tous les points du deuxième ensemble de points. Ces précisions formelles sont des évidences pour l'homme du métier car la terminologie « en amont » et « en aval » est très largement utilisée dans le présent domaine technique.

Cette relation entre la position des premier et deuxième orifices et le bord d'attaque d'une aube ne sont pas limitatif de la position circonférentielle des orifices par rapport au bord d'attaque, d'autant plus que cette position circonférentielle est susceptible de varier au cours du temps lorsque le compresseur basse pression est en fonctionnement vu que le moyeu est alors en rotation.

Préférentiellement, selon le mode de réalisation précédent, une portion du premier orifice s'étend axialement entre des projections radiales respectives sur la virole intérieure et/ou le moyeu du bord d'attaque et d'un bord de fuite de ladite aube. En particulier, dans ce cas, lorsque le moyeu est en rotation autour de l'axe moteur, la tête de l'aube en question passe nécessairement à chaque tour du moyeu en vis-à-vis du premier orifice et, donc, de la cavité. Ceci permet de capter plus efficacement le flux d'air de tourbillons de fuite directement dans la cavité par le premier orifice étant donné que le jeu entre la tête de l'aube et le rotor est typiquement minime. De cette façon, ce flux d'air est contrôlé et acheminé par la cavité jusqu'au deuxième orifice, en amont de ce bord d'attaque, où il est réinjecté au sein du flux d'air principal du compresseur basse pression. Préférentiellement, la portion du premier orifice et le deuxième orifice sont au moins partiellement alignés axialement, dans le sens où il existe une droite, de préférence une pluralité de droites, parallèle à l'axe moteur intersectant la portion du premier orifice et le deuxième orifice.

La virole intérieure étend de préférence une surface extérieure du moyeu de façon à (re)constituer une veine aérodynamique intérieure. Chaque projection radiale susmentionnée est préférentiellement considérée sur une surface externe de cette veine. En particulier, un bord d'aube est projeté radialement par une projection orthogonale de chaque point sur cette surface obtenue par intersection entre cette dernière et une droite perpendiculaire à l'axe moteur passant par ce point.

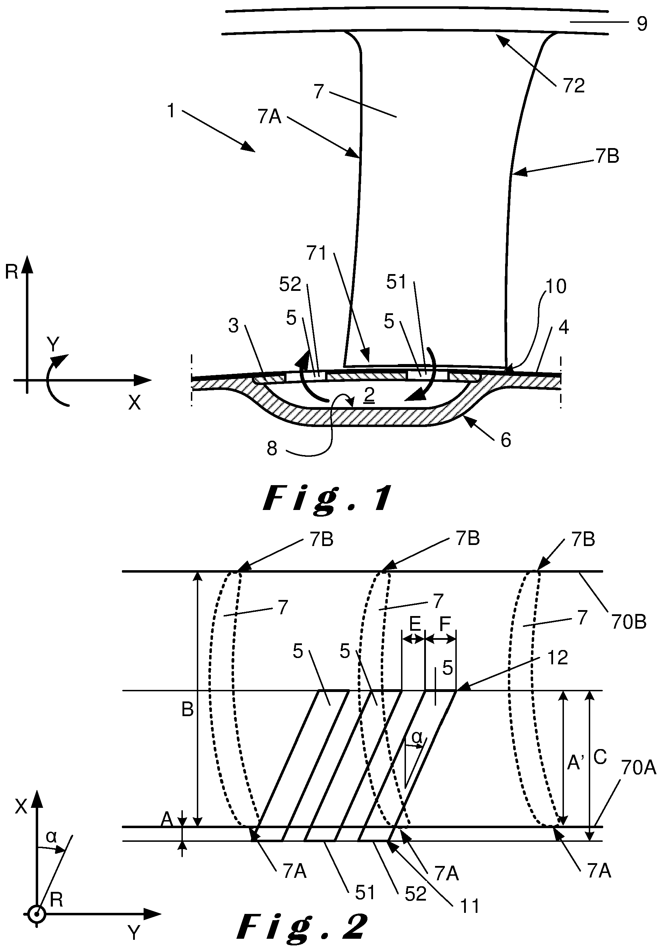

Préférentiellement, selon les modes de réalisation préférés qui précèdent, la virole intérieure comprend une pluralité de paires de premier et deuxième orifices tels que décrits. Cette formulation n'exclus pas le cas où un deuxième orifice d'une paire serait un premier orifice pour une autre paire. Un exemple d'une telle configuration est illustré en figure 1 ci-après introduite. Préférentiellement, la répartition des orifices (et/ou des premier et deuxième orifices) sur la virole intérieure est régulière.

Préférentiellement, les orifices s'étendent uniquement en amont d'un bord de fuite de chaque aube. Il est en effet avantageux d'introduire des orifices essentiellement en vis-à-vis axialement des têtes d'aubes et en amont de celles-ci pour capter du flux d'air et le réinjecter en amont et/ou en entrée du redresseur au sein du flux d'air principal du compresseur basse pression.

Selon un mode de réalisation préféré de la présente invention, une collection des orifices sont essentiellement alignés de façon circonférentielle. Ils présentent préférentiellement chacun un profil en forme de parallélogramme s'étendant axialement avec un angle d'inclinaison d'au plus 60° par rapport à l'axe moteur. De tels orifices présentent l'avantage d'être faciles à être percés (éventuellement régulièrement) successivement les uns à la suite des autres dans une virole intérieure. Comme ces orifices s'étendent axialement, ils permettent d'amener un flux d'air des tourbillons de fuite d'aval vers amont, sur toute leur extension axiale, et non pas en de seules positions précises. L'angle d'inclinaison permet, quant à lui, d'orienter plus ou moins l'orifice de façon circonférentielle en suivant le mouvement tournant du rotor, préférentiellement de façon à ce qu'une tête d'aube soit en vis-à-vis radialement de plusieurs tels orifices communiquant avec la cavité, ce qui permet un meilleur contrôle de l'acheminement du flux d'air d'aval vers amont. Cette forme des orifices de la collection contribue à d'accroître les performances aérodynamiques globales de la turbomachine d'aéronef, et à diminuer la consommation en carburant de cette dernière.

Il est à noter que le fait que les orifices de la collection aient tous un profil en forme de parallélogramme ne limite pas strictement la forme du parallélogramme pour chaque orifice. En particulier, la collection comprend optionnellement de tels orifices s'étendant davantage axialement et/ou circonférentiellement que d'autres, et/ou présentant des angles d'inclinaison susceptibles d'être différents. Cependant, il est préféré que tous les orifices de la collection aient un profil correspondant à un seul parallélogramme.

Préférentiellement, chacun des orifices de la collection s'étend en amont et en aval d'un bord d'attaque de chaque aube. De la sorte, chaque orifice permet à la fois une captation de flux d'air en aval des bords d'attaque des aubes et une réinjection de ce flux d'air en amont de ces bords d'attaque. Plus préférentiellement, chaque orifice de la collection comprend :
- une extrémité amont, située en amont du bord d'attaque, à une distance axiale de ce dernier d'au plus 25%, de préférence entre 10 et 25%, d'une corde de chaque aube ;
- une extrémité aval, située en aval du bord d'attaque, à une distance axiale de ce dernier d'au plus 75%, de préférence entre 10 et 75%, de la corde de chaque aube.
Il est rappelé que le terme « distance axiale » fait référence à une distance mesurée le long de l'axe moteur. En particulier, la distance axiale entre deux points de l'espace correspond à la valeur absolue de la différence de leur composante selon l'axe moteur. Une telle distance (axiale) entre deux ensemble de points est généralement reconnue comme la plus petite des distances (axiales) entre un point d'un de ces ensembles et un point de l'autre de ces ensembles. La « corde » d'une aube correspond, quant à elle, à une mesure de l'extension de cette aube le long de l'axe moteur, cette mesure étant de préférence effectuée au niveau de la tête de l'aube. Le terme « corde d'une aube » est usuel pour un homme du métier et de façon générique à une « longueur axiale » de l'aube, ce dernier terme désignant génériquement une longueur mesurée le long de l'axe moteur.

Les valeurs d'au plus 25% et 75%, et leurs valeurs préférées associées, indiquent que les orifices sont susceptibles de s'étendre de façon axiale, suffisamment en amont pour réinjecter du flux d'air strictement en amont du redresseur, et suffisamment en aval (tout en restant en amont du bord de fuite des aubes) pour capter ce flux d'air efficacement sur le long des jeux entre les têtes des aubes et la virole intérieure et/ou le moyeu.

Dans cet esprit, et préférentiellement selon ces derniers modes de réalisation, une longueur axiale de chaque orifice de la collection est comprise entre 10 et 75% d'une corde de chaque aube.

Selon un mode de réalisation préféré de la présente invention, compatible avec les modes de réalisation préférés précédents, les orifices comprennent deux groupes d'orifices alignés de façon circonférentielle, les groupes étant à une distance axiale l'un de l'autre comprise entre 10 et 50% d'une corde de chaque aube. Il est ainsi possible de capter du flux d'air spécifiquement avec les orifices d'un de ces groupes, en une position aval choisie des bords d'attaque des aubes, et de le réinjecter en une position amont, préférentiellement en amont de ces bords d'attaque, par les orifices de l'autre de ces groupes. Le flux d'air est ainsi acheminé entre les orifices de ces groupes par la cavité, sans perturbation du flux d'air sur la distance axiale séparant ces deux groupes. Les points de captation et de réinjection du flux d'air peuvent en outre être plus précisément choisis, éloignés de la distance axiale susmentionnée également choisie.

Selon une réalisation particulière, un des groupes correspond à la collection susdite selon des modes de réalisation précédents, et les orifices de l'autre des groupes présentent chacun un autre profil en forme de parallélogramme. Préférentiellement, les orifices de l'autre groupe s'étendent axialement avec un autre angle d'inclinaison d'au plus 60° par rapport à l'axe moteur.

Selon un mode de réalisation préféré de la présente invention, les orifices occupent plus d'une moitié d'une surface (cylindrique) de la virole intérieure qui s'étend axialement entre une extrémité globale amont et une extrémité globale aval de tous les orifices. En d'autres termes, la virole intérieure comprend alors une plus grande surface d'orifices que de matière, entre les extrémités globales susdites.

Selon l'invention, la cavité est partitionnée en une pluralité d'alvéoles fixes par rapport aux aubes, et limitées par des bords, chaque alvéole s'étendant à la fois de façon axiale et circonférentielle, selon une direction inclinée axialement, de sorte qu'elle comprend :
- une portion aval radialement en vis-à-vis d'un espace séparant des première et deuxième des aubes alignées successivement de façon circonférentielle ;
- une portion amont radialement en vis-à-vis d'un autre espace séparant des troisième et quatrième des aubes alignées successivement de façon circonférentielle, au moins une parmi la troisième et la quatrième aubes étant distincte à la fois des première et deuxième aubes.
Cet énoncé s'applique quel que soit l'instant considéré, même pendant la rotation du moyeu, de sorte qu'il existe toujours de telles portions aval et amont situés en vis-à-vis d'espaces distincts entre deux aubes alignées successivement, à chaque tel instant. De cette façon, du flux d'air capté en aval au niveau axial d'une aube et/ou d'un espace entre deux aubes est réinjecté en amont d'une autre aube et/ou d'un autre espace entre deux aubes. Ceci permet une amélioration des performances du compresseur par une limitation des perturbations qui pourraient être dues à une cavité de trop grande taille. Selon un mode de réalisation particulier des alvéoles, la quatrième aube correspond à la première aube, de sorte que les troisième, première et deuxième aubes, dans cet ordre, sont alignées successivement de façon circonférentielle. Ce mode de réalisation particulier des alvéoles permet avantageusement une captation du flux d'air de tourbillons de fuite au niveau de l'intrados d'une aube, en l'occurrence, la première aube, et une extraction de ce flux d'air de l'extrados de cette même aube. La réinjection de ce flux d'air au sein du flux d'air primaire en est facilité. Les bords des alvéoles peuvent être en biseau, de façon à optimiser l'écoulement du flux d'air au sein de chaque alvéole. Préférentiellement, chaque orifice est en communication fluidique avec une seule alvéole.

Selon un mode de réalisation général de la présente invention, des bordures des orifices sont en biseau, de façon à présenter un profil évasé. Un tel profil est de préférence évasé extérieurement en aval des bords d'attaque des aubes pour faciliter la captation d'un flux d'air, et évasé intérieurement en amont des bords d'attaque des aubes pour faciliter la réinjection du flux d'air en amont du redresseur.

De façon générale et préférée, le sous-ensemble selon cette invention comprend un carter extérieur (et fixe). Chacune des aubes du redresseur comprend un pied fixé au carter extérieur, et s'étend de façon essentiellement radiale intérieurement à partir de son pied vers sa tête libre.

La présente invention propose aussi un étage de compresseur basse pression comprenant le sous-ensemble selon l'invention. Dans ce cas, le rotor est préférentiellement muni d'aubes mobiles dont chacune comprend un pied fixé au moyeu et s'étend essentiellement radialement extérieurement à partir de ce pied. L'invention propose également un compresseur basse pression d'une turbomachine d'aéronef comprenant un étage et/ou un sous-ensemble selon la présente invention. Les modes de réalisation préférés et les avantages du sous-ensemble selon l'invention se transposent mutatis mutandis aux présents étage de compresseur basse pression et compresseur basse pression.

L'invention propose enfin une turbomachine d'aéronef munie d'un compresseur basse pression selon l'invention. Les modes de réalisation préférés et les avantages du compresseur basse pression selon l'invention se transposent mutatis mutandis à la présente turbomachine d'aéronef.

L'usage, dans le présent document, du verbe « comprendre », de ses variantes, ainsi que ses conjugaisons, ne peut en aucune façon exclure la présence d'éléments autres que ceux mentionnés. L'usage, dans le présent document, de l'article indéfini « un », « une », ou de l'article défini « le », « la » ou « l' », pour introduire un élément n'exclut pas la présence d'une pluralité de ces éléments. Les termes « premier », « deuxième », « troisième », et ainsi de suite, sont, quant à eux, utilisés dans le cadre de ce document exclusivement pour différencier différents éléments semblables, et ce sans impliquer d'ordre entre ces éléments.

Il est rappelé que la présente invention concerne le domaine technique des compresseurs (et, en particulier, celui des compresseurs basse pression) de turbomachines d'aéronefs. Ce domaine technique est très particulier et fait intervenir des contraintes techniques spécifiques aux compresseurs. En particulier, il a lieu de ne pas confondre et/ou amalgamer ce domaine technique à celui distinct des turbines d'une turbomachine d'aéronef. Il est notamment rappelé que l'objet d'un compresseur est de compresser de l'air pénétrant dans la turbomachine d'aéronef, à l'entrée de celle-ci, alors que celui d'une turbine est de détendre un gaz à la sortie de la chambre de combustion de la turbomachine d'aéronef. Les rôles, positions et contraintes techniques (par exemple, les vitesses de rotations, les températures, l'exposition à des débris extérieurs, ...) associées au fonctionnement d'un compresseur et d'une turbine d'une turbomachine d'aéronef sont notamment complètement différents. Un homme du métier intéressé par le domaine technique des compresseurs de turbomachines d'aéronef, et a fortiori dans le contexte technique de la présente invention très particulier introduit dans l'art antérieur, ne consulterait pas et ne s'inspirerait pas d'un document de l'état de la technique relatif aux turbines de turbomachines d'aéronef pour développer une invention relative aux compresseurs sans qu'il ressorte clairement de cet état de la technique comment prendre en compte les nombreuses différences techniques entre ces domaines techniques.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 illustre une vue schématique partielle d'une coupe d'un sous-ensemble de compresseur basse pression selon un mode de réalisation de l'invention ;
- les figures 2 et 3 illustrent des vues schématiques d'agencements locaux d'orifices et d'aubes de redresseur avec des profils projetés sur une veine aérodynamique intérieure du compresseur basse pression selon des modes de réalisation de l'invention ;
- les figures 4A et 4B illustrent des vues schématiques et partielles respectivement tridimensionnelle et bidimensionnelle projetée d'une cavité partitionnée en alvéoles dans un moyeu de rotor selon un mode de réalisation de l'invention ;
- la figure 5 représente une vue schématique simplifiée de coupe de turbomachine d'aéronef selon un mode de réalisation de l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

Cette partie présente une description détaillée de modes de réalisation préférés de la présente invention. Cette dernière est décrite avec des réalisations particulières et des références à des figures mais l'invention n'est pas limitée par celles-ci. Les dessins et/ou figures décrits ci-dessous ne sont que schématiques et ne sont pas limitants.

Des références sont représentées sur certaines de ces figures comme repères géométriques abstraits essentiellement afin de quantifier et/ou visualiser des propriétés de modes de réalisation de l'invention. Dans le cadre du présent document, il est fait référence aux directions « axiale », « circonférentielle » et « radiale » correspondant respectivement en des directions parallèle à l'axe moteur, essentiellement circulaire autour de l'axe moteur, et perpendiculaire à l'axe moteur. Des repères sur les figures illustrent ces directions (munies d'un sens) notées respectivement X, R et Y. Par abus de notation pour des éléments analogues, comme le vecteur X correspondant a le même sens et la même direction que l'axe moteur, ce dernier sera aussi désigné par la référence X. Les termes « axialement », « radialement » et « circonférentiellement » sont dérivés respectivement des termes « axial », « radial » et « circonférentiel », avec une signification préférée analogue. Les termes « circonférentielle » et « radiale » font en outre préférentiellement référence à un système de coordonnées polaires connu d'un homme du métier dans chaque plan perpendiculaire à l'axe moteur. Les termes « intérieurement » et « vers l'intérieur » correspondent naturellement à un sens vers l'axe moteur X selon une direction radiale, et les termes « extérieurement » et « vers l'extérieur » au sens opposé selon cette direction.

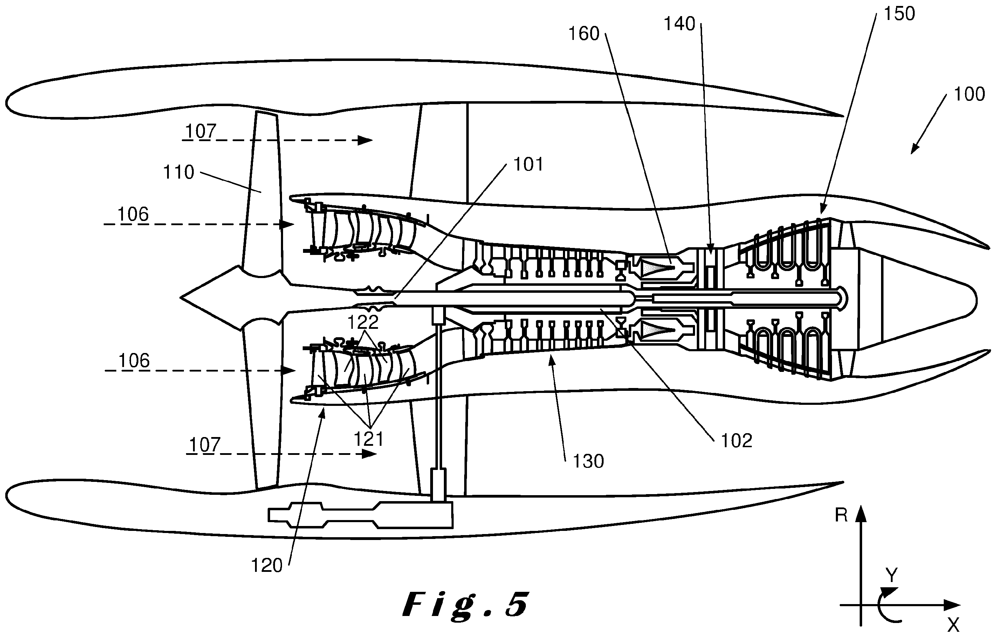

La figure 5 illustre une turbomachine d'aéronef 100 axiale à double flux comprenant successivement le long de l'axe moteur X, une soufflante 110, un compresseur basse pression 120, un compresseur haute pression 130, une chambre de combustion 160, une turbine haute pression 140 et une turbine basse pression 150. Ces éléments sont connus d'un homme du métier. En fonctionnement, la puissance mécanique des turbines basse 150 et haute 140 pression est transmise, respectivement via des arbres basse 101 et haute 102 pression, aux compresseurs basse 120 et haute 130 pression, ainsi qu'à la soufflante 110 via l'arbre basse pression 101. Tel qu'il est connu, la soufflante 110 permet de générer un flux d'air primaire 106 traversant la turbomachine d'aéronef 100 dans une veine aérodynamique primaire et un flux d'air secondaire 107 extérieurement autour des compresseurs 120, 130 et des turbines 140, 150.

Le compresseur basse pression 120 comprend en alternance le long de l'axe moteur X d'aubages mobiles 122 autour de l'axe moteur X, et de redresseurs 121 constitués d'aubages fixes. La figure 1 représente une coupe d'un sous-ensemble 1 d'un compresseur basse pression 120 selon un mode de réalisation préféré de l'invention. Ce sous-ensemble 1 comprend un des redresseurs 121 susdits. Celui-ci comprend des aubes 7 fixes en porte-à-faux alignées circonférentiellement et de profil semblable. Chaque aube 7 comprend un pied 72 fixé à un carter extérieur 9 du compresseur basse pression 120, et une tête libre 71 (c'est-à-dire qu'elle n'est pas fixée à un autre élément) opposée à ce pied 72 le long d'une direction radiale d'extension de l'aube 7. En particulier, l'aube 7 s'étend essentiellement radialement intérieurement. L'aube 7 comprend aussi un bord d'attaque 7A et un bord de fuite 7B orientés principalement en amont et en aval. Le redresseur 121 permet de ramener l'écoulement du flux d'air primaire 106 parallèlement à l'axe moteur X, et en même temps d'augmenter sa pression et de diminuer sa vitesse absolue.

Le sous-ensemble 1 comprend également une partie de rotor (ou rotor) comprenant un moyeu 6 s'étendant circonférentiellement autour de l'axe moteur X et tournant autour de celui-ci. La partie de rotor comprend généralement des aubes mobiles s'étendant essentiellement radialement extérieurement, vers le carter extérieur 9, à partir d'un pied fixé au moyeu 6. L'aubage fixe formant le redresseur 121 et l'aubage mobile du rotor sont alors assemblés l'un à côté de l'autre, le long de l'axe moteur X.

De façon générale, les têtes libres 71 des aubes 7 en porte-à-faux font face radialement (ou, de façon analogue, sont en vis-à-vis) du moyeu 6, sans toutefois toucher celui-ci étant donné que les aubes 7 sont fixes et que le moyeu 6 est tournant. Un jeu (ou espace) 10 minime existe donc entre les têtes libres 71 d'aubes 7 et le moyeu 6. Ce jeu entraîne la génération et la circulation de flux d'air issus de tourbillons de fuite d'aval vers amont, ce qui est source d'une perte de rendement du compresseur basse pression 120. Pour réduire cet effet, la présente invention propose de traiter le moyeu 6 de façon à créer en lui au moins un renfoncement intérieur (c'est-à-dire un renfoncement vers l'intérieur) 8 au moins en vis-à-vis radial d'une position de passage des têtes libres 71 d'aubes 7.

L'invention propose également d'adjoindre à la partie de rotor une virole intérieure 3 destinée à recouvrir ce renfoncement inférieur 8, de façon à prolonger la surface extérieure du moyeu 6 sans renfoncement et à reconstituer une veine aérodynamique intérieure 4 initialement présente avant le traitement du moyeu 6. De cette façon, le jeu 10 entre la veine aérodynamique intérieure 4 et les têtes libres 71 d'aubes 7 est essentiellement conservé. La virole intérieure 3 est fixée au moyeu 6, de préférence par soudure. Cette opération permet aussi de définir une cavité 2 bordée axialement et radialement intérieurement par le renfoncement intérieur 8 du moyeu 6 et radialement extérieurement par la virole intérieure 3. La cavité 2 a préférentiellement une profondeur, prise selon une direction radiale, dans un intervalle entre 5% de la longueur radiale de l'aube 7 et 20% de la longueur radiale de l'aube 7. La cavité 2 a préférentiellement une longueur, prise selon une direction axiale, dans un intervalle entre 50% de la largeur axiale de l'aube 7 et 150% de la largeur axiale de l'aube 7.

La virole intérieure 3 comprend des orifices 5 en communication avec la cavité 2. Au moins un orifice est en communication avec le jeu 10. Chaque tête libre 71 fait face à la veine aérodynamique intérieure 4, et de façon plus précise, au moins partiellement à la virole intérieure 3 et/ou à la cavité 2, ainsi qu'optionnellement partiellement au moyeu 6. Les orifices 5 sont agencés de sorte que les têtes libres 71 d'aubes 7 soient en vis-à-vis des premiers orifices 51 (ou portions d'orifices) et en aval de deuxièmes orifices 52 (ou autres portions d'orifices) lorsque le moyeu 6 tourne, et ce de façon régulière et/ou périodique. Du flux d'air des tourbillons de fuite (qui est représenté par des flèches sur la figure 1) peut ainsi être capté par ces premiers orifices 51, acheminé d'aval vers amont au sein de la cavité 2 et réinjecté en amont par ces deuxièmes orifices 52.

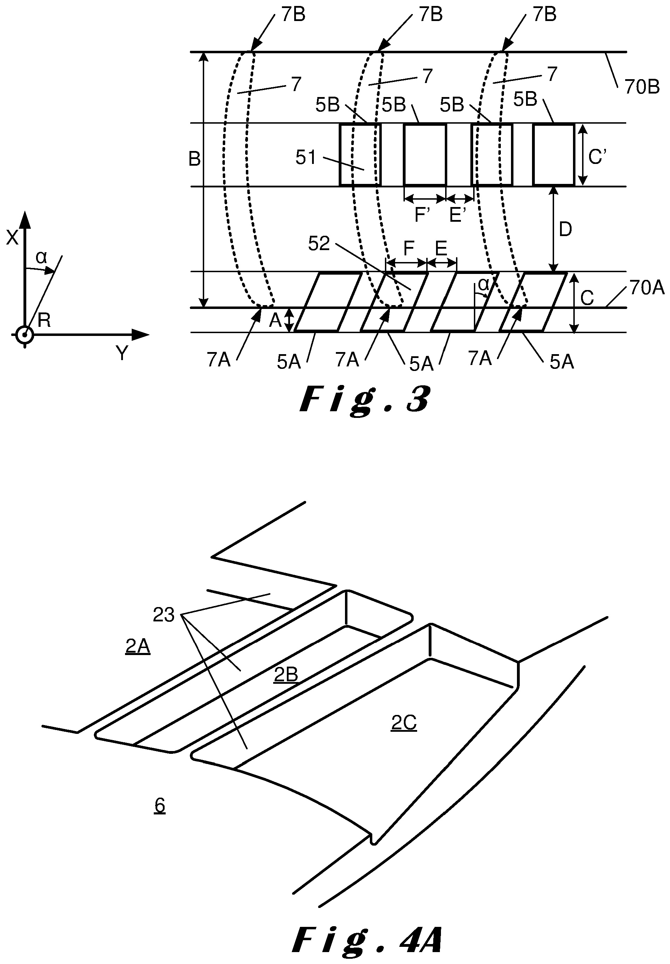

Les figures 2 et 3 illustrent chacune une veine aérodynamique intérieure 4 (représentée comme déroulée circonférentiellement et étalée sur un plan) sur laquelle sont projetés radialement des profils des aubes 7 et comprenant les orifices 5. Les références introduites relatives aux aubes s'appliquent de façon semblable. Les bords d'attaque 7A et les bords de fuite 7B des aubes 7 sont respectivement sur les lignes 70A et 70B.

Les orifices 5 comprennent une collection (ou premier groupe 5A) d'orifices 5 qui s'étendent à la fois axialement sur une longueur axiale C et circonférentiellement, et présentent tous un profil en forme de parallélogramme avec un angle d'inclinaison α préféré compris entre 0 et 60°, de préférence entre 30 et 45°, par rapport à l'axe moteur X. Le long d'une circonférence de la veine aérodynamique intérieure 4, les orifices ont une largeur circonférentielle F constante et son séparé par un espace circonférentiel E, de préférence plus petit que la largueur circonférentielle F. Chacun de ces orifices 5 comprend à la fois une extrémité amont 11 à une distance axiale A de la ligne 70A comprise de préférence entre 5 et 15% d'une corde B des aubes 7, et une extrémité aval 12 à une distance axiale A' := C - A de la ligne 70A comprise de préférence entre 10 et 75% de la corde B des aubes 7. En particulier, tous les orifices 5 sont uniquement en amont des bord de fuite 7B des aubes 7, étant donné que c'est précisément au niveau axial des têtes libres 71 d'aubes qu'il faut capter du flux d'air de tourbillons de fuite pour l'amener en amont des bords d'attaques 7A des aubes 7. Ces orifices 5 en forme de parallélogramme présentent l'avantage d'être très facile à concevoir et efficace pour obtenir l'effet technique visé par la présente invention.

Dans le cas de la figure 2, les orifices 5 s'étendent axialement sur une grande longueur axiale C, comprise préférentiellement entre 60 et 80% de la corde B des aubes 7. Ces orifices 5 s'étendant ainsi continument de leur extrémité aval 12, entre les bords d'attaque 7A et de fuite 7B des aubes 7, jusqu'à leur extrémité amont 11, en amont du bord d'attaque 7A des aubes 7, permettant de capter sur toute leur longueur du flux d'air pour l'amener via la cavité 2 d'aval en amont et le réinjecter en amont du redresseur 121 au sein du flux d'air primaire. L'angle d'inclinaison α fait que, simultanément, une portion aval d'un premier orifice 51 s'étend en vis-à-vis d'une aube 7, entre ses bords d'attaque 7A et de fuite 7B, tandis qu'une portion amont d'un deuxième orifice 52 s'étend en amont (et en aval) du bord d'attaque 7A de cette même aube 7, ces deux portions étant au moins partiellement alignée axialement, dans le sens où il existe une droite, préférentiellement une pluralité de droites, parallèles à l'axe moteur X qui les intersecte.

Dans le cas de la figure 3, les orifices 5 s'étendent axialement sur une plus courte longueur axiale C, comprise de préférence entre 10 et 40% de la corde B des aubes 7. Ils sont couplés par la cavité 2 à un deuxième groupe 5B d'orifices 5, le deuxième groupe 5B est en aval du premier 5A à une distance axiale D comprise de préférence entre 10 et 50% de la corde B des aubes 7. Les orifices 5 du deuxième groupe 5B sont d'un profil géométrique indépendant de ceux du premier groupe 5A (correspondant à des parallélogrammes d'angle d'inclinaison nul dans le cas de la figure 3, c'est-à-dire, à des rectangles). Ils s'étendent axialement sur une longueur axiale C', comprise de préférence entre 10 et 40% de la corde B des aubes 7, et sont d'une largueur circonférentielle F' de préférence plus grande qu'un espace circonférentiel E' les séparant deux à deux. Les orifices 5 du deuxième groupe 5B sont dédiés principalement à capter le flux d'air de tourbillons de fuite entre les bords d'attaque 7A et de fuite 7B des aubes 7, alors que les orifices 5 du premier groupe 5A sont davantage dédiés à réinjecter de façon contrôlée ce flux d'air en amont du redresseur 121. En particulier, préférentiellement, au moins une portion d'un premier orifice 51 du deuxième groupe 5B s'étend en vis-à-vis d'une aube 7, entre ses bords d'attaque 7A et de fuite 7B, tandis qu'au moins une portion d'un deuxième orifice 52 du premier groupe 5A s'étend en amont (et en aval) du bord d'attaque 7A de cette même aube 7, ces deux portions étant au moins partiellement alignées axialement au sens susdit.

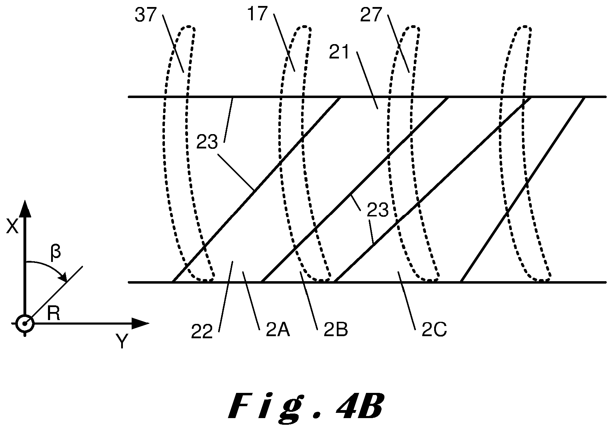

Selon un mode de réalisation préféré de l'invention illustré en figures 4A et 4B, la cavité 2 est partitionnée en alvéoles 2A, 2B, 2C limitées par des bords 23 typiquement formés dans le moyeu 6. Chaque telle alvéole 2A, 2B, 2C s'étend axialement au moins partiellement en vis-à-vis radial des aubes 7 et circonférentiellement selon un angle principal β de préférence compris entre 10 et 60°, de sorte qu'une portion amont 22 de chaque telle alvéole 2A est radialement en vis-à-vis d'un espace entre une troisième (37) et une première (17) des aubes 7, alors qu'une portion aval 21 de cette alvéole 2A est radialement en vis-à-vis d'un espace entre la première aube (17) et une deuxième aube (27) distinctes des précédentes. De cette façon, du flux d'air des tourbillons de fuite est amené d'aval vers amont dans une alvéole 2A, d'un espace entre deux aubes 7 d'une paire d'aubes 7 successives, dans un autre espace entre deux aubes 7 d'une autre paire d'aubes 7 successives. Les alvéoles 2A, 2B, 2C peuvent par exemple être réalisées par embossage de la paroi du moyeu 8.

En résumé, la présente invention concerne un sous-ensemble 1 de compresseur basse pression 120 d'une turbomachine d'aéronef 100 comprenant un redresseur 121 muni d'aubes 7 en porte-à-faux et un moyeu 6 de rotor comprenant une cavité 2 couverte par une virole intérieure 3 en vis-à-vis des aubes 7, des orifices 5 étant pratiqués dans cette virole intérieure 3 pour permettre la circulation d'un flux d'air d'aval en amont du compresseur basse pression 120.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Sous-ensemble (1) de compresseur basse pression (120) d'une turbomachine d'aéronef (100) s'étendant le long d'un axe moteur (X) dirigé d'amont vers aval, le sous-ensemble (1) comprenant :
- un rotor comprenant un moyeu (6) s'étendant axialement et de façon circonférentielle autour de l'axe moteur (X) ;
- un stator comprenant un redresseur (121) muni d'aubes (7) s'étendant essentiellement radialement vers le moyeu (6) ;
le sous-ensemble étant tel que :
- le moyeu (6) comprend un renfoncement intérieur (8) dirigé vers l'axe moteur (X) ;
- le rotor comprend une virole intérieure (3) :
• couvrant le renfoncement intérieur (8) de façon à définir une cavité (2) entre le moyeu (6) et la virole intérieure (3),
chacune des aubes (7) comprenant une tête libre (71) faisant face au moins partiellement à la virole intérieure (3) et/ou à la cavité (2) ;
• comprenant des orifices (5) en communication fluidique avec la cavité (2) ;
et tel que la cavité (2) est partitionnée en alvéoles (2A, 2B, 2C) limitées par des bords (23), chaque alvéole s'étendant à la fois de façon axiale et circonférentielle, selon une direction inclinée axialement, de sorte qu'elle comprend :
- une portion aval (21) radialement en vis-à-vis d'un espace entre des première (17) et deuxième (27) des aubes qui soient alignées successivement de façon circonférentielle ;
- une portion amont (22) radialement en vis-à-vis d'un autre espace entre des troisième (37) et quatrième des aubes qui soient alignées successivement de façon circonférentielle, au moins une parmi la troisième (37) et la quatrième aubes étant distincte à la fois des première (17) et deuxième aubes (27).

2. Sous-ensemble (1) selon la revendication précédente, **caractérisé en ce qu'**un premier des orifices (51) s'étend au moins en aval d'un bord d'attaque (7A) d'une des aubes (7), et **en ce qu'**un deuxième des orifices (52) s'étend au moins en amont dudit bord d'attaque (7A).

3. Sous-ensemble (1) selon la revendication précédente, **caractérisé en ce qu'**au moins une portion du premier orifice (51) s'étend axialement entre des projections radiales respectives sur la virole intérieure (3) et/ou le moyeu (6) du bord d'attaque (7A) et d'un bord de fuite (7B) de ladite aube (7), la portion du premier orifice (51) et le deuxième orifice (52) étant préférentiellement au moins partiellement alignés axialement.

4. Sous-ensemble (1) selon la revendication 2 ou 3, **caractérisé en ce que** la virole intérieure (3) comprend plusieurs paires de tels premier (51) et deuxième (52) orifices.

5. Sous-ensemble (1) selon l'une quelconque des revendications précédentes, **caractérisé en ce qu'**une collection desdits orifices (5) sont essentiellement alignés de façon circonférentielle et présentent chacun un profil en forme de parallélogramme s'étendant axialement avec un angle d'inclinaison (α) d'au plus 60° par rapport à l'axe moteur (X).

6. Sous-ensemble (1) selon la revendication précédente, **caractérisé en ce que** chacun des orifices (5) de la collection s'étend en amont et en aval d'un bord d'attaque (7A) de chaque aube (7).

7. Sous-ensemble (1) selon la revendication précédente, **caractérisé en ce que** chacun des orifices (5) de la collection comprend :
- une extrémité amont (11), située en amont dudit bord d'attaque (7A), à une distance axiale (A) de ce dernier d'au plus 25% d'une corde (B) de chaque aube (7) ;
- une extrémité aval (12), située en aval dudit bord d'attaque (7A), à une distance axiale (A') de ce dernier d'au plus 75% de la corde (B) de chaque aube (7).

8. Sous-ensemble (1) selon l'une quelconque des trois revendications précédentes, **caractérisé en ce qu'**une longueur axiale (C) de chaque orifice (5) de la collection est comprise entre 10 et 75% d'une corde (B) de chaque aube (7).

9. Sous-ensemble (1) selon la revendication précédente, **caractérisé en ce que** les orifices (5) comprennent deux groupes (5A, 5B) d'orifices alignés de façon circonférentielle, les groupes (5A, 5B) étant à une distance axiale (D) l'un de l'autre comprise entre 10 et 50% d'une corde (B) de chaque aube (7), et **en ce qu'**un des groupes (5A) correspond à la collection et **en ce que** les orifices (5) de l'autre des groupes (5B) présentent chacun un autre profil en forme de parallélogramme.

10. Sous-ensemble (1) selon l'une quelconque des revendications 1 à 8, **caractérisé en ce que** les orifices (5) comprennent deux groupes (5A, 5B) d'orifices alignés de façon circonférentielle, les groupes (5A, 5B) étant à une distance axiale (D) l'un de l'autre comprise entre 10 et 50% d'une corde (B) de chaque aube (7).

11. Sous-ensemble (1) selon l'une quelconque des revendications précédentes, **caractérisé en ce que** des bordures des orifices (5) sont en biseau, de façon à présenter un profil évasé.

12. Sous-ensemble (1) selon l'une quelconque des revendications précédentes, **caractérisé en ce que** :
- le renfoncement intérieur (8) est formé d'au moins une déformation d'une paroi du moyeu (6) ;
- la virole intérieure (3) est formée d'une partie de plaque annulaire.

13. Compresseur basse pression (120) d'une turbomachine d'aéronef (100), **caractérisé en ce qu'**il comprend un sous-ensemble (1) selon l'une quelconque des revendications 1 à 12.

14. Turbomachine d'aéronef (100), **caractérisée en ce qu'**elle est munie d'un compresseur basse pression (120) selon la revendication précédente.

## Patentansprüche

1. Unterbaugruppe (1) für einen Niederdruckverdichter (120) eines Flugzeug-Turbotriebwerks (100), die sich entlang einer Motorachse (X) erstreckt, die von stromaufwärts nach stromabwärts gerichtet ist, wobei die Unterbaugruppe (1) umfasst:
- einen Rotor, der eine Nabe (6) umfasst, die sich axial und umfänglich um die Motorachse (X) erstreckt;
- einen Stator, der einen Abrichter (121) umfasst, der mit Schaufeln (7) versehen ist, die sich im Wesentlichen radial zur Nabe (6) hin erstrecken;
wobei die Unterbaugruppe derart ist, dass:
- die Nabe (6) eine innere Aussparung (8) umfasst, die zur Motorachse (X) hin gerichtet ist;
- der Rotor einen Innenring (3) umfasst:
- der die innere Aussparung (8) abdeckt, um einen Hohlraum (2) zwischen der Nabe (6) und dem Innenring (3) zu definieren, wobei jede der Schaufeln (7) einen freien Kopf (71) umfasst, der dem Innenring (3) und/oder dem Hohlraum (2) mindestens teilweise gegenüber zu liegen;
- der Öffnungen (5) in strömungstechnischer Kommunikation mit dem Hohlraum (2) umfasst;
und derart, dass der Hohlraum (2) in Zellen (2A, 2B, 2C) unterteilt ist, die durch Ränder (23) begrenzt sind, wobei sich jede Zelle sowohl axial, als auch umfänglich in einer axial geneigten Richtung erstreckt, sodass sie umfasst:
- einen stromabwärts gelegenen Abschnitt (21) radial gegenüber einem Raum zwischen der ersten (17) und zweiten (27) der Schaufeln, die nacheinander umfänglich ausgerichtet sind;
- einen stromaufwärts gelegenen Abschnitt (22) radial gegenüber einem anderen Raum zwischen der dritten (37) und vierten der Schaufeln, die nacheinander umfänglich ausgerichtet sind, wobei mindestens eine der dritten (37) und der vierten Schaufel sich sowohl von der ersten (17) als auch der zweiten Schaufel (27) unterscheidet.

2. Unterbaugruppe (1) nach dem vorstehenden Anspruch, **dadurch gekennzeichnet, dass** sich eine erste der Öffnungen (51) mindestens stromabwärts einer Vorderkante (7A) einer der Schaufeln (7) gelegen erstreckt, und dadurch, dass sich eine zweite der Öffnungen (52) mindestens stromaufwärts der Vorderkante (7A) gelegen erstreckt.

3. Unterbaugruppe (1) nach dem vorstehenden Anspruch, **dadurch gekennzeichnet, dass** sich mindestens ein Abschnitt der ersten Öffnung (51) axial zwischen jeweiligen radialen Vorsprüngen auf dem Innenring (3) und/oder der Nabe (6) der Vorderkante (7A) und einer Hinterkante (7B) der Schaufel (7) erstreckt, wobei der Abschnitt der ersten Öffnung (51) und die zweite Öffnung (52) vorzugsweise axial mindestens teilweise ausgerichtet sind.

4. Unterbaugruppe (1) nach Anspruch 2 oder 3, **dadurch gekennzeichnet, dass** der Innenring (3) mehrere Paare solcher erster (51) und zweiter (52) Öffnungen umfasst.

5. Unterbaugruppe (1) nach einem der vorstehenden Ansprüche, **dadurch gekennzeichnet, dass** eine Sammlung der Öffnungen (5) im Wesentlichen umfänglich ausgerichtet sind, und jeweils ein Profil in Form eines Parallelogramms aufweisen, das sich axial mit einem Neigungswinkel (α) von höchstens 60° in Bezug auf die Motorachse (X) erstreckt.

6. Unterbaugruppe (1) nach dem vorstehenden Anspruch, **dadurch gekennzeichnet, dass** sich jede der Öffnungen (5) der Sammlung stromaufwärts und stromabwärts einer Vorderkante (7A) einer jeden Schaufel (7) erstreckt.

7. Unterbaugruppe (1) nach dem vorstehenden Anspruch, **dadurch gekennzeichnet, dass** jede der Öffnungen (5) der Sammlung umfasst:
- ein stromaufwärts gelegenes Ende (11), das sich stromaufwärts der Vorderkante (7A) gelegen, in einem axialen Abstand (A) von dieser letzteren von höchstens 25% einer Sehne (B) einer jeden Schaufel (7) befindet;
- ein stromabwärts gelegenes Ende (12), das sich stromabwärts der Vorderkante (7A) gelegen, in einem axialen Abstand (A') von dieser letzteren von höchstens 75% der Sehne (B) einer jeden Schaufel (7) befindet.

8. Unterbaugruppe (1) nach einem der drei vorstehenden Ansprüche, **dadurch gekennzeichnet, dass** die axiale Länge (C) einer jeden Öffnung (5) der Sammlung zwischen 10 et 75% einer Sehne (B) einer jeden Schaufel (7) umfasst ist.

9. Unterbaugruppe (1) nach dem vorstehenden Anspruch, **dadurch gekennzeichnet, dass** die Öffnungen (5) zwei Gruppen (5A, 5B) an umfänglich ausgerichteten Öffnungen umfassen, wobei die Gruppen (5A, 5B) in einem axialen Abstand (D) voneinander sind, der zwischen 10 und 50% einer Sehne (B) einer jeden Schaufel (7) umfasst ist, und dadurch, dass eine der Gruppen (5A) der Sammlung entspricht, und dadurch, dass die Öffnungen (5) der anderen der Gruppen (5B) jeweils ein anderes Profil in Form eines Parallelogramms aufweisen.

10. Unterbaugruppe (1) nach einem der Ansprüche 1 bis 8, **dadurch gekennzeichnet, dass** die Öffnungen (5) zwei Gruppen (5A, 5B) an umfänglich ausgerichteten Öffnungen umfassen, wobei die Gruppen (5A, 5B) in einem axialen Abstand (D) voneinander sind, der zwischen 10 und 50% einer Sehne (B) einer jeden Schaufel (7) umfasst ist.

11. Unterbaugruppe (1) nach einem der vorstehenden Ansprüche, **dadurch gekennzeichnet, dass** Ränder der Öffnungen (5) gefasst sind, um ein ausgestelltes Profil aufzuweisen.

12. Unterbaugruppe (1) nach einem der vorstehenden Ansprüche, **dadurch gekennzeichnet, dass**:
- die innere Aussparung (8) aus mindestens einer Verformung einer Wand der Nabe (6) gebildet ist;
- der Innenring (3) aus einem Teil einer kreisförmigen Platte gebildet ist.

13. Niederdruckverdichter (120) eines Flugzeug-Turbotriebwerks (100), **dadurch gekennzeichnet, dass** er eine Unterbaugruppe (1) nach einem der Ansprüche 1 bis 12 umfasst.

14. Flugzeug-Turbotriebwerk (100), **dadurch gekennzeichnet, dass** es mit einem Niederdruckverdichter (120) nach dem vorstehenden Anspruch versehen ist.

## Claims

1. Sub-assembly (1) for a low-pressure compressor (120) of an aircraft turbine engine (100) extending along an engine axis (X) directed from upstream towards downstream, the sub-assembly (1) comprising:
- a rotor comprising a hub (6) extending axially and circumferentially about the engine axis (X);
- a stator comprising a straightener (121) provided with vanes (7) extending substantially radially towards the hub (6);
the sub-assembly being such that:
- the hub (6) comprises an inner recess (8) directed towards the engine axis (X);
- the rotor comprises an inner shroud (3):
- covering the inner recess (8), so as to define a cavity (2) between the hub (6) and the inner shroud (3), each of the vanes (7) comprising a free head (71) facing at least partially the inner shroud (3) and/or the cavity (2);
- comprising orifices (5) in fluid communication with the cavity (2);
and such that the cavity (2) is partitioned into cells (2A, 2B, 2C) bounded by edges (23), each cell extending both axially and circumferentially, along an axially inclined direction, such that it comprises:
- a downstream portion (21) radially facing a space between first (17) and second (27) of the vanes which are aligned successively circumferentially;
- an upstream portion (22) radially facing another space between third (37) and fourth of the vanes which are aligned successively circumferentially, at least one from among the third (37) and the fourth vanes being distinct both from the first (17) and second (27) vanes.

2. Sub-assembly (1) according to the preceding claim, **characterised in that** a first of the orifices (51) extends at least downstream of a leading edge (7A) of one of the vanes (7), and **in that** a second of the orifices (52) extends at least upstream of said leading edge (7A).

3. Sub-assembly (1) according to the preceding claim, **characterised in that** at least one portion of the first orifice (51) extends axially between respective radial projections on the inner shroud (3) and/or the hub (6) of the leading edge (7A) and a trailing edge (7B) of said vane (7), the portion of the first orifice (51) and the second orifice (52) being preferably at least partially aligned axially.

4. Sub-assembly (1) according to claim 2 or 3, **characterised in that** the inner shroud (3) comprises several pairs of such first (51) and second (52) orifices.

5. Sub-assembly (1) according to any one of the preceding claims, **characterised in that** a collection of said orifices (5) are substantially aligned circumferentially and each have a parallelogram-shaped profile extending axially with an angle of inclination (α) of at most 60° with respect to the engine axis (X).

6. Sub-assembly (1) according to the preceding claim, **characterised in that** each of the orifices (5) of the collection extends upstream and downstream from a leading edge (7A) of each vane (7).

7. Sub-assembly (1) according to the preceding claim, **characterised in that** each of the orifices (5) of the collection comprises:
- an upstream end (11), located upstream from said leading edge (7A), at an axial distance (A) from the latter by at most 25% of a chord (B) of each vane (7);
- a downstream end (12), located downstream from said leading edge (7A), at an axial distance (A') from the latter of at most 75% of the chord (B) of each vane (7).

8. Sub-assembly (1) according to any one of the three preceding claims, **characterised in that** an axial length (C) of each orifice (5) of the collection is between 10 and 75% of a chord (B) of each vane (7).

9. Sub-assembly (1) according to the preceding claim, **characterised in that** the orifices (5) comprise two groups (5A, 5B) of orifices aligned circumferentially, the groups (5A, 5B) being at an axial distance (D) from one another of between 10 and 50% of a chord (B) of each vane (7), and **in that** one of the groups (5A) corresponds to the collection, and **in that** the orifices (5) of the other of the groups (5B) each have another parallelogram-shaped profile.

10. Sub-assembly (1) according to any one of claims 1 to 8, **characterised in that** the orifices (5) comprise two groups (5A, 5B) of orifices aligned circumferentially, the groups (5A, 5B) being at an axial distance (D) from one another of between 10 and 50% of a chord (B) of each vane (7).

11. Sub-assembly (1) according to any one of the preceding claims, **characterised in that** the borders of the orifices (5) are bevelled, so as to have a flared profile.

12. Sub-assembly (1) according to any one of the preceding claims, **characterised in that**:
- the inner recess (8) is formed of at least one deformation of a wall of the hub (6);
- the inner shroud (3) is formed of an annular plate part.

13. Low-pressure compressor (120) for an aircraft turbine engine (100), **characterised in that** it comprises a sub-assembly (1) according to any one of claims 1 to 12.

14. Aircraft turbine engine (100), **characterised in that** it is provided with a low-pressure compressor (120) according to the preceding claim.
